# EUROPEAN PATENT APPLICATION

(11) **EP 0 744 434 A1**
(43) Date of publication of application: **27.11.1996**
(21) Application number: 95201390.2
(22) Date of filing: 26.05.1995
(51) Int. Cl.: C08J 5/18, B65D 85/00

(54) **Packaging film for respiring materials**

(71) Applicant: DU PONT DE NEMOURS INTERNATIONAL S.A., 1218 Le Grand-Saconnex (Genève) (CH)
(72) Inventor: Cardinal, Jean-Claude, CH-1297 Founex/Vd (CH)

(57) **Abstract**

Packaging made from a block copolyether ester, a block copolyether amide or a polyurethane for biological material such as foods and flowers which are actively respiring.

## Description

The present invention relates to packaging films for the food and flower industry, more particularly to packaging films suitable for packaging materials which respire.

### Background of the Invention

Various packaging materials have been proposed for preserving respiring biological materials, such as foods and flowers, after they are harvested or produced. One means for so doing is to package the biological materials in "modified atmosphere packaging" (MAP) or "controlled atmosphere packaging" (CAP). Such packaging is designed to modify the levels of carbon dioxide (CO₂), oxygen (O₂) and/or other gases to which the packaged articles are exposed, in order to retard deterioration. A number of theories have been proposed as to the effect varying the levels of these gases has on the rate of decomposition of respiring biological materials (c.f. "Storage of Common Mushroom under Controlled Atmospheres", Briones et al., International Journal of Food Science and Technology. (1992) 27, 493-505; "Modified Atmosphere Packaging of Common Mushroom", International Journal of Food Science and Technology. (1993) 28, 57-68; "Recent Developments in the Processing of Fruit and Vegetables in France", Varoquaux, The European Food and Drink Review, Autumn 1993; "Ready-to-use Fresh Fruits and Vegetables", Varoquaux, Rev. Gen. Froid, July 1991).

Certain polymer films have been proposed for such applications (c.f. US Patent No 5,254,354). These films are described as being made from a polymer having a side-chain crystallizable polymer and a permeability which increases by a factor of greater than 2.5 in response to a 10°C temperature increase.

It has now been found that packaging films made from block copolyether esters, block copolyether amides and polyurethanes are able to create particularly desirable modified atmospheres for the packaging of respiring biological materials.

### Summary of the Invention

Accordingly, the present invention relates to the use of a packaging film of a block copolyether ester, a block copolyether amide or a polyurethane to package an actively respiring biological material such as a food product or a flower, and to the resulting packaged article.

### Detailed description of the Invention

As used herein, certain terms have the following meanings.

"Biological materials which respire" refer generally to meats, milk products such as cheeses, fruits, vegetables and flowers. Particularly good results can be obtained with the packaging films of this invention when used to package vegetables, such as tomatoes, mushrooms, cut carrots, green beans, lettuce and beansprouts.

The particular packaging films of the present invention, i.e., block copolyether esters, block copolyether amides and polyurethanes, are known per se, and commercially available. As films, these polymers have thicknesses ranging from 10 to 120 microns, and demonstrate O₂ permeability of <15,000 ml/m²-day and CO₂ permeability of >100,000 ml/m²-day at 1 atm pressure, 100% humidity, and 23 °C.

Preferred block copolyether esters are segmented elastomers having soft polyether segments and hard polyester segments (c.f. U.S. Patent No. 4,739,012), available from the DuPont Company under the name Hytrel®.

Suitable block copolyether amides for use in the invention are available under the name Pebax® from Elf Atochem.

The packaging films according to the present invention may be free-standing, or may be part of a multilayer constructions, in combination with conventional highly porous materials, such as paper.

The biological materials can be packaged in any of a variety of known styles. For example, the packaging may be made 100% from the films, or the films may comprise a part of the packaging. In the latter case, a support which holds the biological matters can be used, which is then sealed shut with the packaging film of the present invention. Such support may be made from any conventional material which is a gas barrier, such as polypropylene, polystyrene, etc.

Alternatively, the packaging material of the present invention can be formed as a "window" in a sealing film made from another material. In this case, the film for sealing the support can be of a conventional gas barrier polymer, such as polyethylene, polyester, etc., into which is formed (by conventional techniques) a window of packaging film of the present invention.

The only governing feature of any such packaging design is that sufficient surface area of packaging film for the present invention be used to provide modified or controlled atmosphere packaging. The specific amount of surface area will, of course, depend upon the size and design of the package, and the type of biological material that is packaged.

### Examples

### MATERIAL AND METHODS

### 1. Raw material:

Cultivated mushrooms are obtained from Gontière (59) farm. 200 to 250 grams of whole mushrooms, with bases removed, are evaluated for organoleptic qualities (color and velum opening) and subsequently stored in bags, having a surface area of 800 cm^{2,} made from various plastics having different permeabilities.

### 2. Reference films:

Various oriented polypropylene films from Sidlaw Packaging, U.K., are used, having the permeability grades listed in Table 1.

**Table 1**

| Permeability of reference films | | |
|---|---|---|
| Ref. Film | O₂ Permeability (ml/m².day.atm) | CO₂ Permeability (ml/m².day.atm) |
| OPP | 900 | 4000 |
| 5000 | 5000 | 9000 |
| 10000 | 10000 | 14000 |
| 25000 | 25000 | 29000 |
| 50000 | 50000 | 29000 |
| 100000 | 100000 | 104000 |
| 200000 | 200000 | 204000 |

### 3. Hytrel® Films studied:

G-4078, G-3548W, HTR-8206, G-4778; all commercially available grades from the DuPont Company.

### 4. Conservation conditions:

Temperature: 8-9 °C
Sampling every second day up to the 8th day.

### 5. Organoleptic evaluation:

Evaluation of the velum opening through visual observation and positioning on the BURTON simplified scale (c.f. LOPEZ-BRIONES et al.).

closed velum: normal appearance at harvesting stretched velum:
torn velum: mushroom is unsaleable
open velum:

### 6. Evaluation of the color of the mushrooms:

Reflectometric measuring of the color with a HUNTERLAB COLORQUEST apparatus.
a) measurement of the external color: 3 measurements on the top of 10 carpophores
b) measurement of internal color: after removal of a 5 mm top section.

Interpretation in the CIE LAB system. The L parameter (luminance) is noted down to evaluate the darkening.

### RESULTS

### 1. Permeability measurements:

### 1.1 Permeability to O₂ and CO₂

The O₂ and CO₂ permeabilities of Hytrel films can be calculated under actual conditions of use from measurements of the level of O₂ and CO₂ in the bags at 8 °C, saturated humidity conditions (internal face of the film). after 2, 4 and 6 days. These are reported in Tables 1 and 2.

**Table 1**

| O₂ permeability of Hytrel® films | |
|---|---|
| Hytrel® Film | O₂ permeability (ml O₂/m².day.atm) |
| G-4078 | 7400 |
| G-3548 W | 9800 |
| HTR 8206 | 8700 |
| G-4778 | 7400 |

**Table 2**

| CO₂ permeability of Hytrel® films | |
|---|---|
| Hytrel® Film | CO₂ permeability (ml CO₂/m².day.atm) |
| G-4078 | 730 000 |
| G-3548 W | 700 000 |
| HTR 8206 | 690 000 |
| G-4778 | 650 000 |

### 2. Effect of the film on the organoleptic qualities:

### 2.1 Effect on the opening of the velum:

It is known that the CO₂ prevents the opening of the carpophores. Thus, the most impermeable films prevent the ripening of the mushroom (for mushrooms packed in the films OPP, 5000 and 10000: 100 % of velum sketch after 6 days of conservation at 8 - 9 °C). The mushrooms packed in the films 100000 and 200000 behave like those packed in Hytrel® films (about 20 % of velum tears).

### 2.2 Effect on the color:

After 2 days of conservation, the external color of the mushrooms packed in Hytrel® films is statistically lighter (average L less than 91) than the one of mushrooms packed with oriented polypropylene film (L increases from 86 to 90 according to the permeability of the film). The internal color is also much more attractive for the mushrooms packed in Hytrel® films.

The positive effect of Hytrel® films on the external color of the mushrooms is apparent until the sixth day of conservation; afterwards, the improvement in color is less apparent. However, mushrooms packed in Hytrel® retain the advantage that even beyond the sixth day of conservation they do not become slimy; mushrooms packed in oriented polypropylene, in contrast, ferment and become slimy.

## Claims

1. A packaged article comprising a biological material selected from the group consisting of foods and flowers which are actively respiring, and a packaging film comprising a block copolyether ester, a block copolyether amide or a polyurethane.

2. A packaged article according to claim 1 wherein the biological materials are fruits or vegetables.

3. A packaged article according to claims 1 or 2 wherein the packaging film comprises a block copolyether ester and has an O₂ permeability of <15,000 ml/m²-day and CO₂ permeability of >100,000 ml/m²-day at 1 atm pressure, 100% humidity, and 23 °C.

4. Use of packaging film comprising a block copolyether ester, a block copolyether amide or a polyurethane to package a biological material selected from the group consisting of foods and flowers.
